# EUROPEAN PATENT SPECIFICATION

(11) **EP 4 134 258 B1**
(45) Date of publication and mention of the grant of the patent: **22.04.2026**
(21) Application number: 21796669.6
(22) Date of filing: 01.02.2021
(51) Int. Cl.: B60H 1/14, B60H 1/00, B60H 1/32, B60K 11/00, H01M 10/613, B60L 58/26, B60K 11/02, B60K 1/00, B60L 1/00, H01M 10/663, H01M 10/625, H01M 10/6568, B60H 1/22, H01M 10/615

(54) **REFRIGERANT THERMAL MANAGEMENT MODULE, THERMAL MANAGEMENT SYSTEM AND VEHICLE**
KÄLTEMITTELWÄRMEVERWALTUNGSMODUL, WÄRMEVERWALTUNGSSYSTEM UND FAHRZEUG
MODULE DE GESTION THERMIQUE DE RÉFRIGÉRANT, SYSTÈME DE GESTION THERMIQUE ET VÉHICULE

(30) Priority: 26.04.2020 CN 202010337532
(43) Date of publication of application: 15.02.2023
(73) Proprietor: Huawei Digital Power Technologies Co., Ltd., Shenzhen, Guangdong 518043 (CN)
(72) Inventor: YU, Shuliang, Shenzhen, Guangdong 518129 (CN); WANG, Yanzhong, Shenzhen, Guangdong 518129 (CN); LONG, Feng, Shenzhen, Guangdong 518129 (CN); ZHANG, Hongji, Shenzhen, Guangdong 518129 (CN)
(74) Representative: Gill Jennings & Every LLP
(86) International application number: PCT/CN2021/074631
(87) International publication number: WO 2021/218263

(56) References cited:
- EP-A1- 2 524 829
- EP-B1- 0 816 143
- WO-A1-2019/158316
- CN-U- 205 130 860
- CN-U- 207 045 140
- CN-U- 209 592 253
- CN-U- 209 813 715
- JP-A- 2017 105 393
- US-A1- 2018 208 061
- US-A1- 2019 039 440
- US-B2- 10 371 420

## Description

This application claims priority to Chinese Patent Application No. 202010337532.X, filed with the China National Intellectual Property Administration on April 26, 2020 and entitled "REFRIGERANT THERMAL MANAGEMENT MODULE, THERMAL MANAGEMENT SYSTEM, AND VEHICLE".

### TECHNICAL FIELD

Embodiments of this application relate to the field of electric vehicle technologies, and in particular, to a refrigerant thermal management module, a thermal management system, and a vehicle.

### BACKGROUND

With continuous progress of society and rapid development of economy, problems such as global energy shortage and environmental pollution are becoming more serious, and electric vehicle technologies in China also rapidly develop.

Currently, an electric vehicle thermal management system generally includes a refrigerant system and a coolant system. A relatively large quantity of components required in the existing refrigerant system leads to relatively high costs of the existing thermal management system.

Therefore, there is an urgent need for a refrigerant thermal management design with a simple structure, so that costs of a thermal management system can be reduced while a cooling requirement and a heating requirement are both met.

US10371420B2 discloses an air conditioning device for a vehicle having a compressor that supplies a high-pressure refrigerant, an air heating heat exchanger heating air that is to be blown into a vehicle cabin, a pressure reduction part expanding and decompressing the high-pressure refrigerant so as to supply an intermediate-pressure refrigerant and a low-pressure refrigerant, a first low-pressure side heat exchanger exchanging heat between the intermediate-pressure refrigerant and a heating medium other than the air, a second low-pressure side heat exchanger cooling the heating medium by exchanging heat between the low-pressure refrigerant and the heating medium, a first heating medium circuit through which the heating medium cooled in the second low-pressure side heat exchanger circulates, and a heating medium-air heat exchanger. US2018208061A1 discloses a waste heat utilization system. WO2019158316A1 discloses a heat recovery system for an electric vehicle.

### SUMMARY

The present invention is set out in the claims..

This invention as defined in claim 1 provides a vehicle, to reduce costs of the thermal management system while meeting both a cooling requirement and a heating requirement.

According to a first aspect, an embodiment of this application provides a refrigerant thermal management module, including: a compressor, a condenser, and at least two parallel refrigerant loops, where the compressor, the condenser, and the at least two parallel refrigerant loops are centrally arranged, and any one of the refrigerant loops includes an expansion valve and a plate heat exchanger that are connected in series; when a vehicle function module needs to be cooled, an expansion valve in a target refrigerant loop corresponding to the vehicle function module is opened, where a plate heat exchanger in the target refrigerant loop is configured to absorb heat from a coolant loop of the vehicle function module; and an outlet of the compressor is connected to an inlet of the condenser, an outlet of the condenser is connected to an inlet of the expansion valve in the any one of the refrigerant loops, an outlet of the plate heat exchanger is connected to an inlet of the compressor, and when the vehicle function module needs to be heated, the condenser is configured to release heat to the coolant loop of the vehicle function module.

In the first aspect, components in the refrigerant thermal management module are centrally arranged, so that a pipeline connected between the components is shortened and a refrigerant flow resistance is reduced, improving working performance of the refrigerant loop. In addition, a platform-based design of a refrigerant thermal management function may be implemented through modular design. In addition, a plate heat exchanger in the refrigerant loop is used to absorb heat from a coolant loop in a vehicle function module, to implement a function of cooling the vehicle function module; and a condenser in the refrigerant loop may be further used to release heat to the coolant loop of the vehicle function module, to implement a function of heating the vehicle function module. Regardless of whether the vehicle function module needs to be heated or cooled, refrigerant flows in the refrigerant thermal management module keep a same direction of circulation, and no direction switching is required, greatly simplifying control logic of the refrigerant thermal management module.

In a possible design, the refrigerant thermal management module is configured to be integrally installed in a preset centralized area of a vehicle; and the vehicle function module is installed in a preset function area of the vehicle, and the coolant loop is arranged between the preset centralized area and the preset function area, to perform heat exchange with the vehicle function module through coolant circulation in the coolant loop.

In a possible implementation of the first aspect, compared with a manner of directly arranging a refrigerant loop to establish a heat exchange channel between the refrigerant thermal management module and the vehicle function module, in this embodiment, a manner of establishing a heat exchange channel between the refrigerant thermal management module and the vehicle function module by using the coolant loop has advantages of relatively low costs, relatively easy installation, relatively few components, and relatively easy control. In addition, because the components in the refrigerant thermal management module are centrally arranged, compared with a manner in which components in an existing refrigerant system are dispersedly arranged in an entire vehicle, a pipeline connected between the components in the refrigerant thermal management module provided in this embodiment may be greatly shortened, improving working performance of the refrigerant system, that is, improving cooling and heating capabilities of the refrigerant system.

In a possible design, the vehicle function module includes an electric vehicle battery module (EV battery module) and an electric vehicle air conditioner module (EV AC module), and the EV battery module and the EV AC module correspond to different target refrigerant loops.

In a possible implementation of the first aspect, a heat exchange channel between the EV battery module or the EV AC module and the refrigerant thermal management module is established by using the coolant loop.

In a possible design, the vehicle function module further includes a newly added function module, and the EV battery module, the EV AC module, and the newly added function module correspond to different target refrigerant loops.

In a possible implementation of the first aspect, the module may meet cooling and/or heating requirements of a plurality of different vehicle function modules by disposing a plurality of parallel refrigerant loops, and may further adjust a quantity of refrigerant loops to adapt to an increase or a decrease of a quantity of vehicle function modules, so that the refrigerant thermal management module provided in this embodiment has better adaptability.

In a possible design, a PT sensor is disposed between the compressor and the condenser; and/or a PT sensor is disposed between the compressor and the plate heat exchanger.

In a possible implementation of the first aspect, PT sensors are disposed at the inlet and the outlet of the compressor to adjust operating power of the compressor based on the detected temperature and pressure of the compressor.

According to a second aspect, an embodiment of this application provides a thermal management system, including a coolant management module and the refrigerant thermal management module according to any implementation of the first aspect. The coolant management module includes a coolant loop corresponding to each vehicle function module.

In a possible design, the coolant management module includes a battery coolant loop corresponding to an EV battery module and an AC coolant loop corresponding to an EV AC module.

In a possible design, when the EV battery module needs to be cooled, the battery coolant loop absorbs heat from the EV battery module, and releases heat to a first plate heat exchanger in the refrigerant thermal management module. A battery coolant loop absorbs heat from a condenser in the refrigerant thermal management module, and a battery radiator in the battery coolant loop releases heat to an external environment.

In a possible design, the battery coolant loop includes the first plate heat exchanger, an EV battery, and a first water pump.

An outlet of the first plate heat exchanger is connected to one end of the EV battery, the other end of the EV battery is connected to an inlet of the first water pump, and an outlet of the EV battery is connected to an inlet of the first plate heat exchanger.

In a possible design, when the EV AC module needs cooling, the AC coolant loop absorbs heat from a chiller in the EV AC module and releases heat to a second plate heat exchanger in the refrigerant thermal management module.

In a possible design, the AC coolant loop includes the second plate heat exchanger, the chiller in the EV AC module, and a second water pump. An outlet of the second plate heat exchanger is connected to one end of the chiller, the other end of the chiller is connected to an inlet of the second water pump, and an outlet of the second water pump is connected to an inlet of the second plate heat exchanger.

In a possible design, when the EV battery module needs to be heated, the battery coolant loop absorbs heat from a condenser in the refrigerant thermal management module and releases heat to the EV battery module; and a first plate heat exchanger in the refrigerant thermal management module absorbs heat from a motor of a vehicle and/or an external environment of the vehicle.

In a possible design, the battery coolant loop includes the condenser, an EV battery, and a third water pump. An outlet of the condenser is connected to one end of the EV battery, the other end of the EV battery is connected to an inlet of the third water pump, and an outlet of the third water pump is connected to an inlet of the condenser.

In a possible design, when the EV AC needs heating, the AC coolant loop absorbs heat from the condenser in the refrigerant thermal management module and releases heat to a water condenser in the EV AC module.

In a possible design, the AC coolant loop includes the condenser, the water condenser, and the third water pump. The outlet of the condenser is connected to an inlet of the water condenser, an outlet of the water condenser is connected to the inlet of the third water pump, and the outlet of the third water pump is connected to the inlet of the condenser.

In a possible design, an outlet of the first plate heat exchanger in the refrigerant thermal management module is connected to an inlet of a battery radiator, an outlet of the battery radiator is connected to an inlet of a motor radiator, an outlet of the motor radiator is connected to an inlet of a fourth water pump, an outlet of the fourth water pump is connected to the motor, an outlet of the motor is connected to an inlet of a first water pump, and an outlet of the first water pump is connected to an inlet of the first plate heat exchanger.

In a possible design, a heater is disposed between the condenser and the EV battery; and/or a heater is disposed at the inlet of the first plate heat exchanger in the refrigerant thermal management module.

In a possible design, when the EV AC module needs defogging, another AC coolant loop absorbs heat from a chiller in the EV AC module and releases heat to a second plate heat exchanger in the refrigerant thermal management module, so that an airflow blown by a blower in the EV AC module is condensed by the chiller first, and then heated by the water condenser.

In a possible design, the vehicle function module further includes the motor; when the motor needs to be cooled, a motor coolant loop absorbs heat from the motor and releases heat to an external environment.

In a possible design, the motor coolant loop includes the fourth water pump, the motor, and the motor radiator. The outlet of the fourth water pump is connected to one end of the motor, the other end of the motor is connected to the inlet of the motor radiator, and the outlet of the motor radiator is connected to the inlet of the fourth water pump.

In a possible design, the outlet of the first plate heat exchanger in the refrigerant thermal management module is connected to the inlet of the battery radiator, the outlet of the battery radiator is connected to the inlet of the first water pump, and the outlet of the first water pump is connected to the inlet of the first plate heat exchanger; and the battery radiator is disposed opposite to the motor radiator, so that an airflow blown by a fan performs heat exchange on hot air heated by the motor radiator and cold air cooled by the battery radiator.

According to a third aspect, an embodiment of this application further provides a vehicle, including an EV battery module, an EV AC module, and any possible thermal management system provided in the second aspect. The EV battery module is configured to provide power for a motor of the vehicle, the EV AC module is configured to heat or cool a vehicle seat cabin, and the thermal management system is configured to perform thermal management on the EV battery module and the EV AC module.

According to the refrigerant thermal management module, the thermal management system, and the vehicle provided in embodiments of this application, components in a refrigerant thermal management module are centrally arranged, so that a pipeline connected between the components is shortened and a refrigerant flow resistance is reduced, improving working performance of a refrigerant loop. In addition, a platform-based design of a refrigerant thermal management function may be implemented through modular design. In addition, a plate heat exchanger in the refrigerant loop is used to absorb heat from a coolant loop in a vehicle function module, to implement a function of cooling the vehicle function module; and a condenser in the refrigerant loop may be further used to release heat to the coolant loop of the vehicle function module, to implement a function of heating the vehicle function module. Regardless of whether the vehicle function module needs to be heated or cooled, refrigerant flows in the refrigerant thermal management module keep a same direction of circulation, and no direction switching is required, greatly simplifying control logic of the refrigerant thermal management module.

### BRIEF DESCRIPTION OF DRAWINGS

FIG. 1 is a schematic architectural diagram of an example refrigerant thermal management module according to an embodiment of this application;
FIG. 2 is a schematic architectural diagram of an example thermal management system according to an embodiment of this application;
FIG. 3 is a schematic diagram of operation of the thermal management system shown in FIG. 2 under a first working condition;
FIG. 4a is a schematic diagram of operation of the thermal management system shown in FIG. 2 under a second working condition according to an embodiment of the invention as claimed in claim 1.
FIG. 4b is a schematic diagram of operation of a thermal management system shown in another embodiment under a second working condition;
FIG. 5 is a schematic diagram of operation of the thermal management system shown in FIG. 2 under a third working condition;
FIG. 6 is a schematic diagram of operation of the thermal management system shown in FIG. 2 under a fourth working condition;
FIG. 7 is a schematic diagram of operation of the thermal management system shown in FIG. 2 under a fifth working condition; and
FIG. 8 is a schematic architectural diagram of another example thermal management system according to an embodiment of this application.

### DESCRIPTION OF EMBODIMENTS

In recent years, with continuous progress of society and rapid development of economy, problems such as global energy shortage and environmental pollution are becoming more serious. Energy and environment problems have become strategic problems that endanger national security and directly affect human health and survival. It has become a common responsibility of the international community to save and develop clean energy, improve energy utilization efficiency, protect and improve an environment, and promote comprehensive, coordinated and sustainable development of the economy and society.

In 2000, China has included research and development of electric vehicles in major science and technology projects. After promotion in a plurality of five-year plans, electric vehicle technologies in China have developed rapidly. In 2004, the state issued the *Policy on Development of the Automotive Industry,* which explicitly proposed that the new energy automotive industry should be developed into a national pillar industry. In 2011, the state issued the *Development Plan for the Energy-saving and New Energy Automotive Industry* to further financially help the new energy automotive industry develop. At the same time, local governments issued corresponding policies based on local conditions, such as car purchase subsidies, no temporary number limit, and basic charging equipment construction, to vigorously develop the new energy automotive industry, striving for an early realization of moving forward by leaps and bounds.

However, on one hand, current electric vehicles cannot fully meet requirements of all users due to a relatively short endurance mileage and inconvenient charging. On the other hand, overall costs of an electric vehicle are still higher than those of a conventional fuel vehicle. Currently, willingness of consumers to purchase electric vehicles is increased mainly relying on state subsidies, vehicle license registration without charge, and other incentive policies. Therefore, a short endurance mileage, inconvenient charging, and high costs are current problems to be urgently resolved for development of electric vehicles.

In the field of electric vehicle technologies, a thermal management system of an electric vehicle generally includes an air conditioning system for cooling or heating a passenger cabin, and a thermal management system of a power system for controlling a battery and a motor to work in a proper temperature range. In terms of energy consumption, the thermal management system of the electric vehicle is the second largest energy consumption system besides the power system. In particular, in a low temperature environment in winter, when a heating requirement exists simultaneously between an AC and a battery, a large amount of battery power is consumed, seriously affecting the endurance mileage. In addition, a current thermal management system features a large quantity of components, relatively high costs, complex control, large layout space in the entire vehicle, and the like. Therefore, a thermal management system of an electric vehicle still has large optimization space for design.

Currently, a thermal management system of an electric vehicle generally includes a refrigerant system and a coolant system. The refrigerant system generally includes components such as a compressor, a condenser, an expansion valve, an evaporator, and a plate heat exchanger. In an existing refrigerant system, the foregoing components are generally dispersedly arranged in an entire vehicle. For example, the compressor is generally arranged in a front compartment, the condenser is installed behind an air grille, and the evaporator is installed in an air handling unit. A relatively long pipeline needs to be connected between the components, leading to a large pressure drop loss.

In addition, unit prices of components in the refrigerant system are generally higher than those of components in the coolant system. Furthermore, the refrigerant system is a high-pressure system, and installation costs of the refrigerant system are also far higher than those of the coolant system.

More importantly, a control difficulty of the refrigerant system is also relatively high. Because the refrigerant system needs to consider cooling or heating the passenger cabin and cooling the battery, required control of aspects such as a refrigerant phase change, mode switching between cooling and heating, direction switching of a refrigerant flow, stabilizing of a mode switching system, and heating, frosting, and defrosting of a heat pump are more complex than the control of the coolant system. The compressor, as a core component of the refrigerant system, needs to have a corresponding protection strategy to ensure its stable and safe working.

To resolve the foregoing existing technical problems, embodiments of this application provide a refrigerant thermal management module, a thermal management system, and a vehicle. Components in the refrigerant thermal management module are centrally arranged, so that a pipeline connected between the components is shortened and a refrigerant flow resistance is reduced, improving working performance of the refrigerant loop. In addition, a platform-based design of a refrigerant thermal management function may be implemented through modular design. In addition, a plate heat exchanger in the refrigerant loop is used to absorb heat from a coolant loop in a vehicle function module, to implement a function of cooling the vehicle function module; and a condenser in the refrigerant loop may be further used to release heat to the coolant loop of the vehicle function module, to implement a function of heating the vehicle function module. Regardless of whether the vehicle function module needs to be heated or cooled, refrigerant flows in the refrigerant thermal management module keep a same direction of circulation, and no direction switching is required, greatly simplifying control logic of the refrigerant thermal management module.

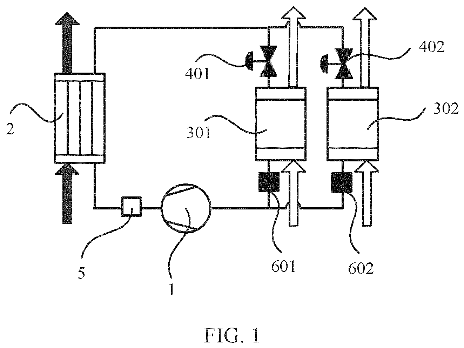

FIG. 1 is a schematic architectural diagram of an example refrigerant thermal management module according to an embodiment of this application. As shown in FIG. 1, the refrigerant thermal management module provided in this embodiment includes a compressor 1, a condenser 2, and at least two parallel refrigerant loops, where the compressor 1, the condenser 2, and the at least two parallel refrigerant loops are centrally arranged, and any one of the foregoing refrigerant loops may include an expansion valve and a plate heat exchanger that are connected in series. It should be noted that the condenser 2 may be a water cooled condenser, and the expansion valve may be an electronic expansion valve.

Optionally, the compressor 1, the condenser 2, and components in the parallel refrigerant loops may be centrally arranged in an entire module, and components disposed in the refrigerant thermal management module are connected by using a pipeline. Optionally, the refrigerant thermal management module may be integrally installed in a preset centralized area of a vehicle, and then a relationship is established between the refrigerant thermal management module and another vehicle function module. In a possible design, the refrigerant thermal management module may be integrally installed in the preset centralized area (for example, a position such as a front compartment, a front part of an underpan, and a middle part of the underpan) of the vehicle, and each vehicle function module is installed in a preset function area of the vehicle, where an installation position of each vehicle function module may be adjusted based on an entire vehicle arrangement. Then, a coolant loop is arranged between the preset centralized area and the preset function area, to perform heat exchange with the vehicle function module through coolant circulation in the coolant loop. Compared with a manner of directly arranging a refrigerant loop to establish a heat exchange channel between the refrigerant thermal management module and the vehicle function module, in this embodiment, a manner of establishing a heat exchange channel between the refrigerant thermal management module and the vehicle function module by using the coolant loop has advantages of relatively low costs, relatively easy installation, relatively few components, and relatively easy control. In addition, because the components in the refrigerant thermal management module are centrally arranged, compared with a manner in which components in an existing refrigerant system are dispersedly arranged in an entire vehicle, a pipeline connected between the components in the refrigerant thermal management module provided in this embodiment may be greatly shortened, improving working performance of the refrigerant system, that is, improving cooling and heating capabilities of the refrigerant system. Because a refrigerant pipeline is a high-pressure pipeline, if a pipeline between components is excessively long, a refrigerant flow resistance increases, increasing a refrigerant pressure loss, and affecting working performance of the refrigerant system.

In a possible arrangement manner, a battery coolant loop is arranged between the refrigerant thermal management module and an EV battery module, and an electric vehicle air conditioner coolant loop (EV AC coolant loop for short) is arranged between the refrigerant thermal management module and an EV AC module. In this way, a heat exchange channel between the EV battery module or the EV AC module and the refrigerant thermal management module is established by using the coolant loop.

In addition, optionally, based on the EV battery module and the EV AC module, the vehicle function module may further include a newly added function module, and the EV battery module, the EV AC module, and the newly added function module respectively correspond to different target refrigerant loops. The foregoing newly added function module may be a vehicle-mounted refrigerator module, or may be another function module that needs to be cooled and/or heated. A specific form of the newly added function module is not limited in this embodiment, and may be added as needed based on a function design of a vehicle. It can be learned that the refrigerant thermal management module provided in this embodiment may meet cooling and/or heating requirements of a plurality of different vehicle function modules by disposing a plurality of parallel refrigerant loops, and may further adjust a quantity of refrigerant loops to adapt to an increase or a decrease of a quantity of vehicle function modules, so that the refrigerant thermal management module provided in this embodiment has better adaptability.

In addition, by modularly arranging the compressor, the condenser, and the at least two parallel refrigerant loops, a platform-based design of the refrigerant thermal management module may be further implemented. For customers of different OEMs, an overall system architecture is maintained, and performance of a key component is adjusted. Specifically, the refrigerant thermal management module may be installed on different vehicle models as an integrated module after a design of the refrigerant thermal management module is completed, to meet a requirement for refrigerant circulation on a vehicle. For different arrangement manners of vehicle function modules on different vehicle models, a pipeline design of a coolant system may be adaptively adjusted, so that cooling or heating can be implemented on each vehicle function module by using the refrigerant thermal management module provided in this embodiment.

In a possible design, reference may still be made to the module architecture in FIG. 1. In the refrigerant thermal management module provided in this embodiment, that two parallel refrigerant loops are included may be used as an example for description. For example, a first refrigerant loop includes a first plate heat exchanger 301 and a first expansion valve 401 that are connected in series, and a second refrigerant loop includes a second plate heat exchanger 302 and a second expansion valve 402 that are connected in series.

When the vehicle function module needs to be cooled, an expansion valve in a target refrigerant loop corresponding to the vehicle function module is opened, where a plate heat exchanger in the target refrigerant loop is configured to absorb heat from a coolant loop of the vehicle function module. Still refer to FIG. 1. The first refrigerant loop may be a target refrigerant loop corresponding to the EV battery module, and the second refrigerant loop may be a target refrigerant loop corresponding to the EV AC module. An outlet of the compressor 1 is connected to an inlet of the condenser 2, an outlet of the condenser 2 is connected to an inlet of an expansion valve in any one of the refrigerant loops, and an outlet of the plate heat exchanger is connected to an inlet of the compressor 1, to form a reversed Carnot cycle. Specifically, when refrigerant is performing the reversed Carnot cycle, high-temperature and high-pressure gas state is discharged from the outlet of the compressor 1, condensed into medium-temperature and high-pressure liquid state by using the condenser 2, expanded into low-pressure gas-liquid two-phase state by using the expansion valve, vaporized to absorb heat at the plate heat exchanger, and then returned to the inlet of the compressor 1.

When the EV battery module needs to be cooled, the first expansion valve 401 in the first refrigerant loop is opened, so that refrigerant performs a reversed Carnot cycle in the first refrigerant loop, so that the first plate heat exchanger 301 can absorb heat from a coolant loop corresponding to the EV battery module, and the EV battery module is cooled by using the coolant loop. Specifically, after the first expansion valve 401 in the first refrigerant loop is opened, the refrigerant in the first refrigerant loop first flows to the condenser 2 under an action of the compressor 1. In this case, the condenser 2 is outward exothermic, so that a temperature of the refrigerant flowing through the condenser 2 decreases. Then the refrigerant flows through the first expansion valve 401 and into the first plate heat exchanger 301. In this case, the first plate heat exchanger 301 absorbs heat from the coolant loop corresponding to the EV battery module.

When the EV AC module needs cooling, the second expansion valve 402 in the second refrigerant loop is opened, so that the refrigerant performs a reversed Carnot cycle in the second refrigerant loop, so that the second plate heat exchanger 302 can absorb heat from a coolant loop corresponding to the EV AC module, and the EV AC module is cooled by using the coolant loop. Specifically, after the second expansion valve 402 in the second refrigerant loop is opened, the refrigerant in the second refrigerant loop first flows to the condenser 2 under an action of the compressor 1. In this case, the condenser 2 is outward exothermic, so that a temperature of the refrigerant flowing through the condenser 2 decreases. Then the refrigerant flows through the second expansion valve 402 and into the second plate heat exchanger 302. In this case, the second plate heat exchanger 302 absorbs heat from the coolant loop corresponding to the EV AC module.

In this embodiment, if the vehicle function module needs to be heated, the condenser 1 in the refrigerant thermal management module provided in this embodiment is configured to release heat to the coolant loop of the vehicle function module, to heat the vehicle function module. In this case, no direction switching is required for a refrigerant flow in the refrigerant thermal management module. For example, when the EV battery module needs to be heated, a valve in the coolant loop corresponding to the EV battery module is controlled, so that the condenser 1 in the refrigerant thermal management module releases heat to the coolant loop of the EV battery module, to heat the EV battery module. In addition, when the EV AC module needs heating, a valve in the coolant loop corresponding to the EV AC module is controlled, so that the condenser 1 in the refrigerant thermal management module releases heat to the coolant loop of the EV AC module, to heat the EV AC module.

For the refrigerant thermal management module provided in this embodiment, regardless of whether the vehicle function module needs to be heated or cooled, refrigerant flows in the refrigerant thermal management module keep a same direction of circulation, and no direction switching is required, greatly simplifying control logic of the refrigerant thermal management module. It can be learned that a refrigerant module keeps the refrigerant circulation unchanged by adjusting a coolant circulation water valve and a water pump, to implement various modes and combinations of the modes such as AC cooling and heating, cooling and heating of the battery, and cooling of the motor. In addition, fast switching may be implemented between the foregoing modes, without waiting for a pressure balance of the refrigerant system, and no defrosting is required in a heating mode of a heat pump.

In this embodiment, the compressor, the condenser, and components in the refrigerant loop are centrally arranged, so that a pipeline connected between the components is shortened and a refrigerant flow resistance is reduced, improving working performance of the refrigerant loop. In addition, a platform-based design of a refrigerant thermal management function may be implemented through modular design. In addition, a plate heat exchanger in the refrigerant loop is used to absorb heat from a coolant loop in a vehicle function module, to implement a function of cooling the vehicle function module; and a condenser in the refrigerant loop may be further used to release heat to the coolant loop of the vehicle function module, to implement a function of heating the vehicle function module. Regardless of whether the vehicle function module needs to be heated or cooled, refrigerant flows in the refrigerant thermal management module keep a same direction of circulation, and no direction switching is required, greatly simplifying control logic of the refrigerant thermal management module.

Based on the foregoing embodiment, a PT sensor may be further disposed between the compressor and the condenser; and/or a PT sensor may be disposed between the compressor and the plate heat exchanger. Specifically, still refer to FIG. 1. An outlet pressure sensor 5 of the compressor may be disposed between the compressor 1 and the condensing 2, a first inlet PT sensor 601 of the compressor may be disposed between the compressor 1 and the first plate heat exchanger 301, and a second inlet PT sensor 602 of the compressor may be disposed between the compressor 1 and the second plate heat exchanger 302. The outlet pressure sensor 5 of the compressor, the first inlet PT sensor 601, and the second inlet PT sensor 602 are configured for a working state of the refrigerant thermal management module to adjust operating power of the compressor based on the detected temperature and pressure of the compressor.

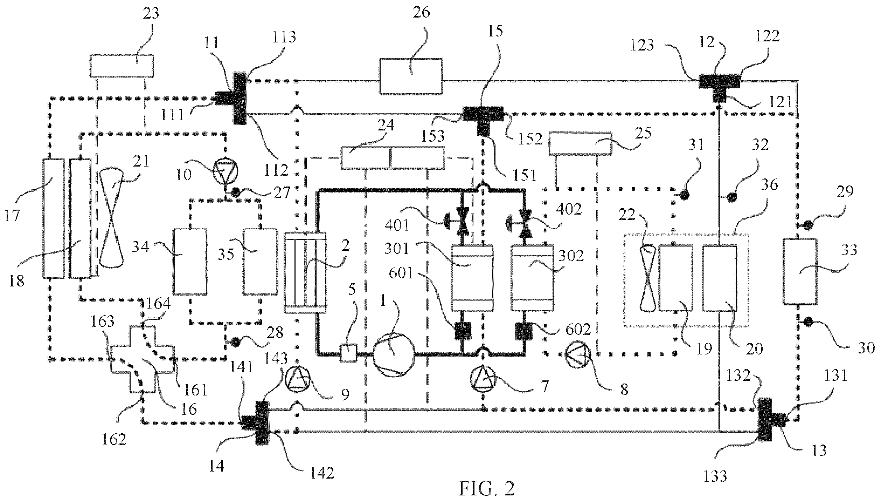

FIG. 2 is a schematic architectural diagram of an example thermal management system according to an embodiment of this application. As shown in FIG. 2, the thermal management system provided in this embodiment includes a coolant management module and a refrigerant thermal management module. The coolant management module includes a coolant loop corresponding to each vehicle function module. Specifically, for an implementation of the refrigerant thermal management module, refer to specific description in the embodiment shown in FIG. 1. Details are not described herein again.

In a possible design, in the refrigerant thermal management module provided in this embodiment, that two parallel refrigerant loops are included may be used as an example for description. For example, a first refrigerant loop includes a first plate heat exchanger 301 and a first expansion valve 401 that are connected in series, and a second refrigerant loop includes a second plate heat exchanger 302 and a second expansion valve 402 that are connected in series. The first refrigerant loop may be a target refrigerant loop corresponding to an EV battery module, and the second refrigerant loop may be a target refrigerant loop corresponding to an EV AC module. An outlet of the compressor 1 is connected to an inlet of the condenser 2, an outlet of the condenser 2 is connected to an inlet of an expansion valve in any one of the refrigerant loops, and an outlet of the plate heat exchanger is connected to an inlet of the compressor 1, to form a reversed Carnot cycle. Specifically, when refrigerant is performing the reversed Carnot cycle, high-temperature and high-pressure gas state is discharged from the outlet of the compressor 1, condensed into medium-temperature and high-pressure liquid state by using the condenser 2, expanded into low-pressure gas-liquid two-phase state by using the expansion valve, vaporized to absorb heat at the plate heat exchanger, and then returned to the inlet of the compressor 1.

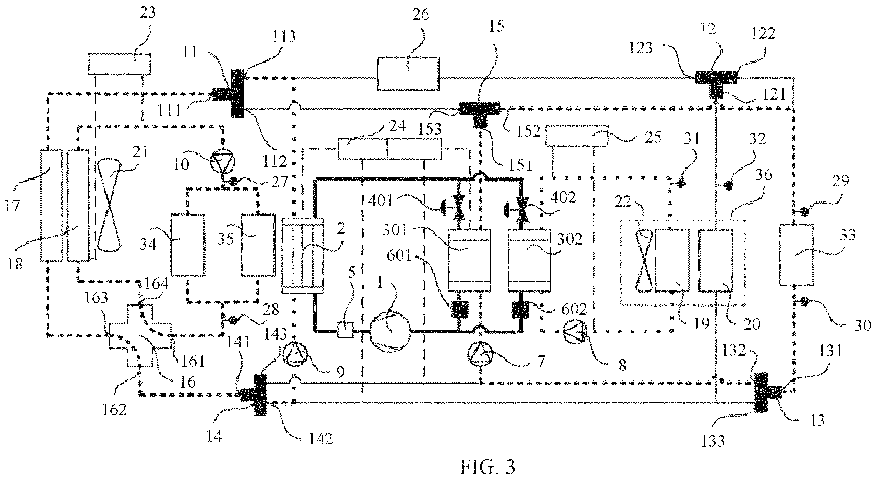

FIG. 3 is a schematic diagram of operation of the thermal management system shown in FIG. 2 under a first working condition. As shown in FIG. 3, when the EV battery module needs to be cooled, a battery coolant loop absorbs heat from the EV battery module, and releases heat to the first plate heat exchanger 301 in the refrigerant thermal management module. A battery coolant loop absorbs heat from the condenser 2 in the refrigerant thermal management module, and a battery radiator 17 in the battery coolant loop releases heat to an external environment.

Specifically, the battery coolant loop includes the first plate heat exchanger 301, an EV battery 33, and a first water pump 7. An outlet of the first plate heat exchanger 301 is connected to one end of the EV battery 33, the other end of the EV battery 33 is connected to an inlet of the first water pump 7, and an outlet of the EV battery 33 is connected to an inlet of the first plate heat exchanger 301.

When the EV battery 33 needs to be cooled, the first expansion valve 401 in the first refrigerant loop is opened. After the first expansion valve 401 is opened, refrigerant first flows to the condenser 2 under an action of the compressor 1. In this case, the condenser 2 is outward exothermic, so that a temperature of the refrigerant flowing through the condenser 2 decreases. Then the refrigerant flows through the first expansion valve 401 and into the first plate heat exchanger 301. In this case, the first plate heat exchanger 301 absorbs heat from the battery coolant loop. In this case, in the battery coolant loop, the first water pump 7 pumps coolant to the first plate heat exchanger 301. In this case, the first plate heat exchanger 301 absorbs heat from the flowing coolant to reduce a temperature of the coolant. Then, the coolant flows into a first end 151 of a fifth coolant three-way valve 15, and then flows out of a second end 152 of the fifth coolant three-way valve 15. In this case, a third end 153 of the fifth coolant three-way valve 15 is closed. The coolant flowing out of the second end 152 of the fifth coolant three-way valve 15 flows into the EV battery 33 to absorb heat from the EV battery 33, to cool the EV battery 33. A third coolant temperature sensor 29 and a third coolant temperature sensor 30 may be further respectively disposed at an inlet and the outlet of the EV battery 33, to monitor temperatures of coolant flowing into the EV battery 33 and flowing out of the EV battery 33. After flowing out of the outlet of the EV battery 33, the coolant continues flowing into a first end 131 of a third coolant three-way valve 13, flows through a second end 132 of the third coolant three-way valve 13, and then returns to the inlet of the first water pump 7. In this case, a third end 133 of the third coolant three-way valve 13 is closed.

When the EV AC module needs cooling, an AC coolant loop absorbs heat from a chiller in the EV AC module and releases heat to the second plate heat exchanger 302 in the refrigerant thermal management module.

Specifically, the AC coolant loop includes the second plate heat exchanger 302, a chiller 19 in the EV AC module, and a second water pump 8. An outlet of the second plate heat exchanger 302 is connected to one end of the chiller 19, the other end of the chiller 19 is connected to an inlet of the second water pump 8, and an outlet of the second water pump 8 is connected to an inlet of the second plate heat exchanger 302.

When an AC performs cooling, the second expansion valve 402 in the second refrigerant loop is opened. After the second expansion valve 402 is opened, the refrigerant first flows to the condenser 2 under an action of the compressor 1. In this case, the condenser 2 is outward exothermic, so that a temperature of the refrigerant flowing through the condenser 2 decreases. Then the refrigerant flows through the second expansion valve 402 and into the second plate heat exchanger 302. In this case, the second plate heat exchanger 302 absorbs heat from the AC coolant loop. In this case, in the AC coolant loop, the second water pump 8 pumps the coolant to the second plate heat exchanger 302. In this case, the second plate heat exchanger 302 absorbs heat from the flowing coolant to reduce a temperature of the coolant. Then, the coolant flows into the chiller 19 of the AC in an air handling unit 36, so that the chiller 19 of the AC absorbs heat from the air. In this case, a blower 22 operates, and blows the cooled air into a driving cabin to implement a cooling function of the AC. After flowing out of the chiller 19 of the AC, the coolant flows back to the inlet of the second water pump 8, completing coolant circulation.

In addition, still refer to FIG. 3. In this embodiment, cooling of a motor may be further implemented. Specifically, the vehicle function module may further include the motor, and when the motor needs to be cooled, a motor coolant loop absorbs heat from the motor and releases heat to an external environment.

Specifically, the foregoing motor coolant loop includes a fourth water pump 10, the motor (for example, a front motor 34 and a rear motor 35 may be included), and a motor radiator 18. An outlet of the fourth water pump 10 is connected to one end of the motor, the other end of the motor is connected to an inlet of the motor radiator 18, and an outlet of the motor radiator 18 is connected to an inlet of the fourth water pump 10.

When the motor needs to be cooled, in the motor coolant loop, the fourth water pump 10 pumps the coolant to the front motor 34 and the rear motor 35. In this case, the coolant absorbs heat from the front motor 34 and the rear motor 35, to cool the front motor 34 and the rear motor 35. A first coolant temperature sensor 27 and a second coolant temperature sensor 28 may be further respectively disposed at an inlet and an outlet of the front motor 34 and the rear motor 35, to monitor temperatures of coolant flowing into the front motor 34 and the rear motor 35 and flowing out of the front motor 34 and the rear motor 35. After flowing out of the outlet of the front motor 34 and the rear motor 35, the coolant continues flowing into a first end 161 of a four-way valve 16, and then flows through a second end 162 of the four-way valve 16 to the motor radiator 18. In this case. a fan 21 may operate to dissipate heat from the motor radiator 18. After flowing out of the motor radiator 18, the coolant flows into the inlet of the fourth water pump 10, completing coolant circulation.

In this case, the battery radiator 17 further needs heat dissipation. Specifically, a third water pump 9 pumps the coolant to the condenser 2. In this case, the coolant absorbs heat from the condenser 2, and the coolant flowing out of the condenser 2 flows into a third end 113 of a first coolant three-way valve 11, and then flows out of a first end 111 of the first coolant three-way valve 11. In this case, a second end 112 of the first coolant three-way valve 11 is closed. The coolant continues flowing into the battery radiator 17. In this case, the fan 21 may operate to dissipate heat from the battery radiator 17. After flowing out of an outlet of the battery radiator 17, the coolant continues flowing into a third end 163 of the four-way valve 16, through a second end 162 of the four-way valve 16, into a first end 141 of a fourth coolant three-way valve 14, and then flows out of a second end 142 of the fourth coolant three-way valve 14. In this case, a third end 143 of the fourth coolant three-way valve 14 is closed. After flowing out of the second end 142 of the fourth coolant three-way valve 14, the coolant flows into an inlet of the third water pump 9, completing coolant circulation.

It should be noted that, for the working condition shown in FIG. 3, cooling of the EV battery may be triggered based on a temperature of the EV battery body, and AC cooling may be determined based on a cooling requirement of a passenger cabin. In addition, active cooling of the motor may be triggered based on a temperature of the motor body and an inlet water temperature of the motor. In addition, under the working condition shown in FIG. 3, the cooling of the EV battery, the AC cooling, and the active cooling of the motor may be separately performed, or may be simultaneously performed.

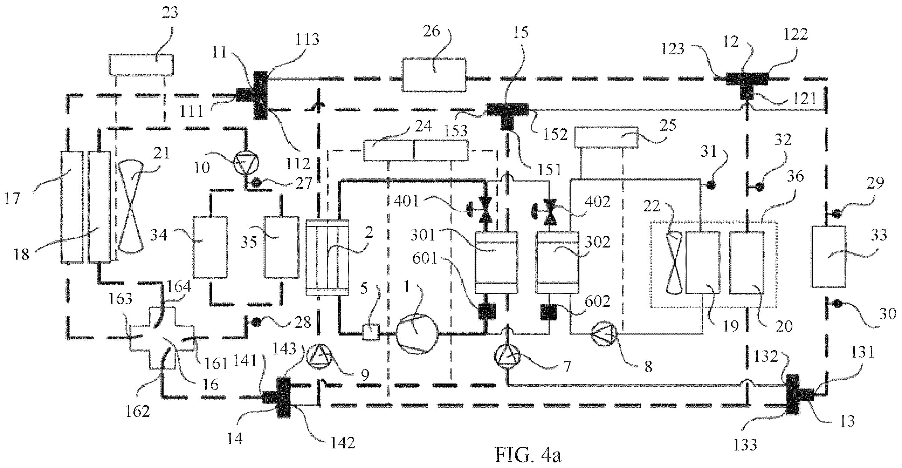

FIG. 4a is a schematic diagram of operation of the thermal management system shown in FIG. 2 under a second working condition according to the invention as claimed in claim 1. As shown in FIG. 4a, when the EV battery module needs to be heated, a battery coolant loop absorbs heat from the condenser in the refrigerant thermal management module and releases heat to the EV battery module, and the first plate heat exchanger in the refrigerant thermal management module absorbs heat from a motor of a vehicle and/or an external environment of the vehicle.

Specifically, the battery coolant loop includes the condenser 2, an EV battery 33, and a third water pump 9. The outlet of the condenser 2 is connected to one end of the EV battery 33, the other end of the EV battery 33 is connected to an inlet of the third water pump 9, and an outlet of the third water pump 9 is connected to the inlet of the condenser 2.

When the EV battery 33 needs to be heated, the third water pump 9 pumps coolant into the condenser 2. In this case, the coolant absorbs heat from the condenser 2, and then flows into a PTC heater 26 to continue absorbing heat. The coolant flowing out of the PTC heater 26 continues flowing into a third end 123 of a second coolant three-way valve 12, and then flows into the EV battery 33 from a second end 122 of the second coolant three-way valve 12, to release heat to the EV battery 33, to heat the EV battery 33. A third coolant temperature sensor 29 and a third coolant temperature sensor 30 may be further respectively disposed at an inlet and the outlet of the EV battery 33, to monitor temperatures of coolant flowing into the EV battery 33 and flowing out of the EV battery 33. After flowing out of an outlet of the EV battery 33, the coolant continues flowing into a first end 131 of a third coolant three-way valve 13, and flows through a third end 133 of the third coolant three-way valve 13, and then returns to the inlet of the third water pump 9. In this case, a second end 132 of the third coolant three-way valve 13 is closed.

When an EV AC needs heating, the AC coolant loop absorbs heat from the condenser in the refrigerant thermal management module and releases heat to a water condenser 20 in the EV AC module. Specifically, in this case, the AC coolant loop includes the condenser 2, the water condenser 20, and the third water pump 9. The outlet of the condenser 2 is connected to an inlet of the water condenser 20, an outlet of the water condenser 20 is connected to the inlet of the third water pump 9, and the outlet of the third water pump 9 is connected to the inlet of the condenser 2.

When the AC needs heating, the third water pump 9 pumps the coolant into the condenser 2. In this case, the coolant absorbs heat from the condenser 2, and then flows into the PTC heater 26 to continue absorbing heat. The coolant flowing out of the PTC heater 26 continues flowing into the third end 123 of the second coolant three-way valve 12, and then flows into the water condenser 20 in an air handling unit 36 from a first end 121 of the second coolant three-way valve 12. In this case, a blower 22 operates to blow the heated air into a driving cabin to implement a heating function of the AC. After flowing out of the water condenser 20 of the AC, the coolant flows back to the inlet of the third water pump 9, completing coolant circulation.

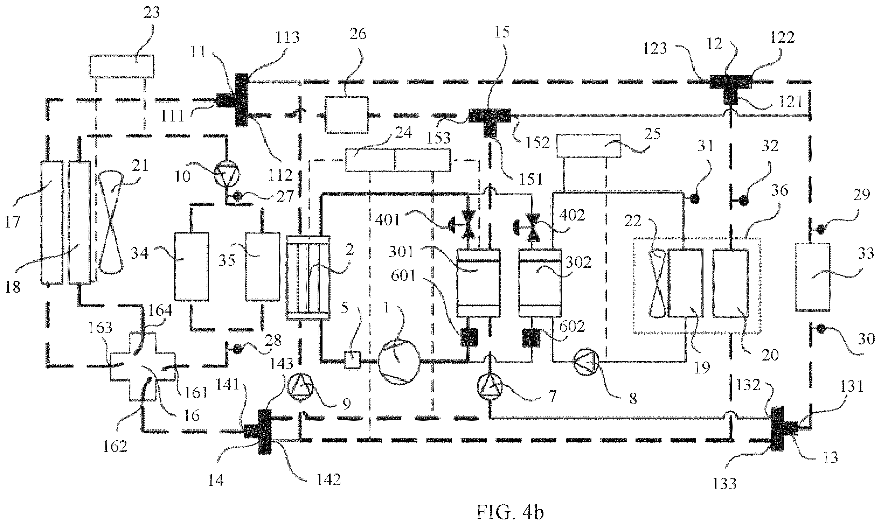

Based on the foregoing embodiment, FIG. 4b is a schematic diagram of operation of a thermal management system shown in another embodiment under a second working condition. As shown in FIG. 4b, in addition to a PTC heater disposed between the condenser 2 and the EV battery 33, to further improve heating efficiency, a PTC heater may be further disposed at an inlet of the first plate heat exchanger 301 in the refrigerant thermal management module.

In addition, still refer to FIG. 4a. An outlet of the first plate heat exchanger 301 in this embodiment is connected to an inlet of a battery radiator 17, an outlet of the battery radiator 17 is connected to an inlet of a motor radiator 18, an outlet of the motor radiator 18 is connected to an inlet of a fourth water pump 10, an outlet of the fourth water pump 10 is connected to the motor, an outlet of the motor is connected to an inlet of a first water pump 7, and an outlet of the first water pump 7 is connected to the inlet of the first plate heat exchanger 301, to implement absorption of heat for the first plate heat exchanger 301.

Specifically, the first water pump 7 pumps the coolant to the first plate heat exchanger 301. In this case, the first plate heat exchanger 301 absorbs heat from the flowing coolant to reduce a temperature of the coolant. Then, the coolant flows into a first end 151 of a fifth coolant three-way valve 15, and then flows out of a third end 153 of the fifth coolant three-way valve 15. In this case, a second end 152 of the fifth coolant three-way valve 15 is closed. The coolant flowing out of the third end 153 of the fifth coolant three-way valve 15 flows into a second end 112 of a first coolant three-way valve 11, and then flows out of a first end 111 of the first coolant three-way valve 11. In this case, a third end 113 of the first coolant three-way valve 11 is closed. The coolant flowing out of the first end 111 of the first coolant three-way valve 11 continues flowing into the battery radiator 17. In this case, a fan 21 may operate to absorb heat from the battery radiator 17. After flowing out of an outlet of the battery radiator 17, the coolant continues flowing into a third end 163 of the four-way valve 16, through a fourth end 164 of the four-way valve 16, into a first end 141 of a fourth coolant three-way valve 14, and then flows out of a third end 143 of the fourth coolant three-way valve 14. In this case, a second end 142 of the fourth coolant three-way valve 14 is closed. Finally, the coolant flowing out of the third end 143 of the fourth coolant three-way valve 14 flows into the inlet of the first water pump 7, completing circulation.

It should be noted that, for the working condition shown in FIG. 4a, heating of the EV battery may be triggered based on a temperature of the EV battery body, and AC heating may be determined based on a heating requirement of a passenger cabin.

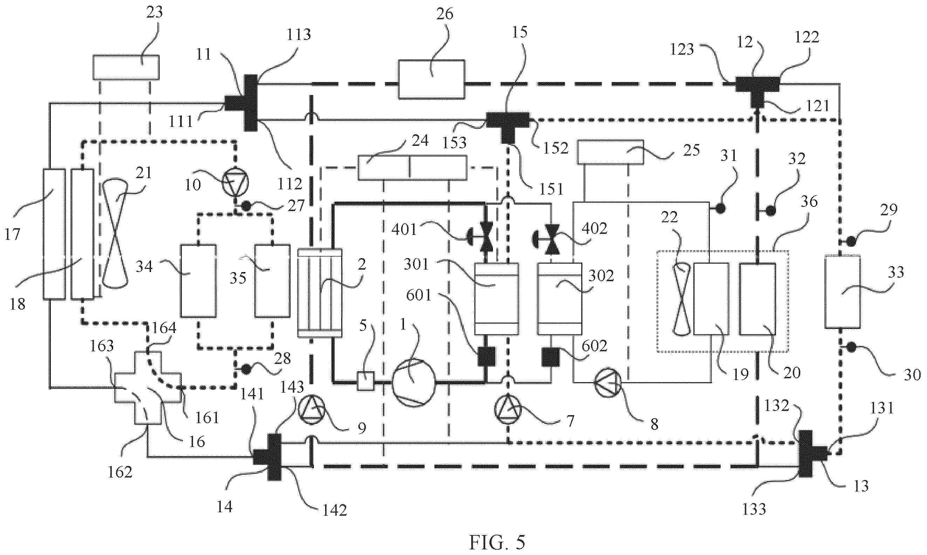

FIG. 5 is a schematic diagram of operation of the thermal management system shown in FIG. 2 under a third working condition. As shown in FIG. 5, when an EV battery 33 needs to be cooled, the first expansion valve 401 in the first refrigerant loop is opened. After the first expansion valve 401 is opened, refrigerant first flows to the condenser 2 under an action of the compressor 1. In this case, the condenser 2 is outward exothermic, so that a temperature of the refrigerant flowing through the condenser 2 decreases. Then the refrigerant flows through the first expansion valve 401 and into the first plate heat exchanger 301. In this case, the first plate heat exchanger 301 absorbs heat from the battery coolant loop. In this case, in a battery coolant loop, a first water pump 7 pumps coolant to the first plate heat exchanger 301. In this case, the first plate heat exchanger 301 absorbs heat from the flowing coolant to reduce a temperature of the coolant. Then, the coolant flows into a first end 151 of a fifth coolant three-way valve 15, and then flows out of a second end 152 of the fifth coolant three-way valve 15. In this case, a third end 153 of the fifth coolant three-way valve 15 is closed. The coolant flowing out of the second end 152 of the fifth coolant three-way valve 15 flows into the EV battery 33 to absorb heat from the EV battery 33, to cool the EV battery 33. A third coolant temperature sensor 29 and a third coolant temperature sensor 30 may be further respectively disposed at an inlet and an outlet of the EV battery 33, to monitor temperatures of coolant flowing into the EV battery 33 and flowing out of the EV battery 33. After flowing out of the outlet of the EV battery 33, the coolant continues flowing into a first end 131 of a third coolant three-way valve 13, flows through a second end 132 of the third coolant three-way valve 13, and then returns to an inlet of the first water pump 7. In this case, a third end 133 of the third coolant three-way valve 13 is closed.

When an AC needs heating, a third water pump 9 pumps the coolant into the condenser 2. In this case, the coolant absorbs heat from the condenser 2, and then flows into a PTC heater 26 to continue absorbing heat. The coolant flowing out of the PTC heater 26 continues flowing into a third end 123 of a second coolant three-way valve 12, and then flows into a water condenser 20 in an air handling unit 36 from a first end 121 of the second coolant three-way valve 12. In this case, a blower 22 operates to blow the heated air into a driving cabin to implement a heating function of the AC. After flowing out of the water condenser 20 of the AC, the coolant flows back to an inlet of the third water pump 9, completing coolant circulation.

Based on the foregoing embodiment, in addition to a PTC heater disposed between the condenser 2 and the EV battery 33, to further improve heating efficiency, a PTC heater may be further disposed at an inlet of the first plate heat exchanger 301 in the refrigerant thermal management module.

When a motor needs to be cooled, in a motor coolant loop, a fourth water pump 10 pumps the coolant to a front motor 34 and a rear motor 35. In this case, the coolant absorbs heat from the front motor 34 and the rear motor 35, to cool the front motor 34 and the rear motor 35. A first coolant temperature sensor 27 and a second coolant temperature sensor 28 may be further respectively disposed at an inlet and an outlet of the front motor 34 and the rear motor 35, to monitor temperatures of coolant flowing into the front motor 34 and the rear motor 35 and flowing out of the front motor 34 and the rear motor 35. After flowing out of the outlet of the front motor 34 and the rear motor 35, the coolant continues flowing into a first end 161 of a four-way valve 16, and then flows through a fourth end 164 of the four-way valve 16 to a motor radiator 18. In this case, a fan 21 may operate to dissipate heat from the motor radiator 18. After flowing out of the motor radiator 18, the coolant flows into an inlet of the fourth water pump 10, completing coolant circulation.

It should be noted that, for the working condition shown in FIG. 5, cooling of the EV battery may be triggered based on a temperature of the EV battery body, and AC heating may be determined based on a heating requirement of a passenger cabin. In addition, active cooling of the motor may be triggered based on a temperature of the motor body and an inlet water temperature of the motor. In addition, under the working condition shown in FIG. 5, the cooling of the EV battery, the AC heating, and the active cooling of the motor may be separately performed, or may be simultaneously performed.

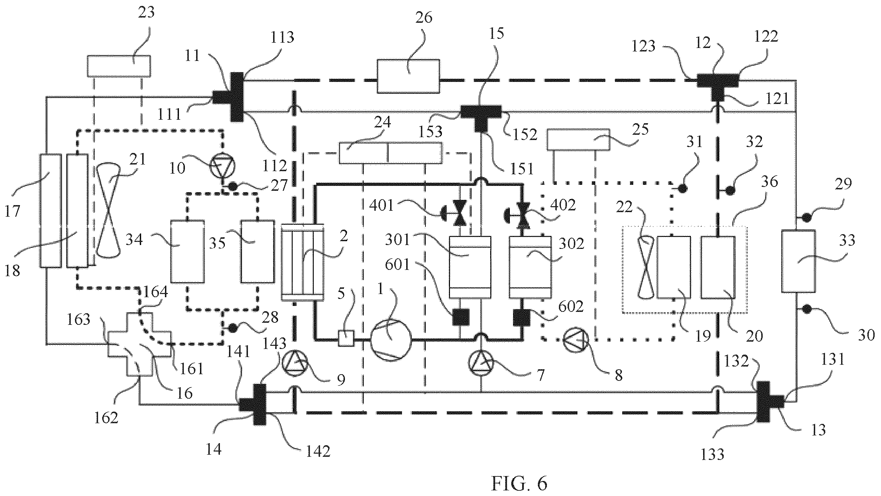

FIG. 6 is a schematic diagram of operation of the thermal management system shown in FIG. 2 under a fourth working condition. As shown in FIG. 6, when the EV AC needs defogging, another AC coolant loop absorbs heat from a chiller 19 in the EV AC module and releases heat to a second plate heat exchanger in the refrigerant thermal management module, so that an airflow blown by a blower 22 in the EV AC module is condensed by the chiller 19 first, and then heated by a water condenser 20.

Specifically, when the EV AC needs defogging, in the AC coolant loop, a second water pump 8 pumps coolant to the second plate heat exchanger 302. In this case, the second plate heat exchanger 302 absorbs heat from the flowing coolant to reduce a temperature of the coolant. Then, the coolant flows into the chiller 19 of the AC in an air handling unit 36, so that the chiller 19 of the AC absorbs heat from the air. In this case, a blower 22 operates to reduce humidity of the air for the first time under an action of cooling, and then blows the cooled air to the water condenser 20 of the AC.

In addition, a third water pump 9 pumps the coolant into the condenser 2. In this case, the coolant absorbs heat from the condenser 2, and then flows into a PTC heater 26 to continue absorbing heat. The coolant flowing out of the PTC heater 26 continues flowing into a third end 123 of a second coolant three-way valve 12, and then flows into the water condenser 20 in the air handling unit 36 from a first end 121 of the second coolant three-way valve 12, to heat the cold air whose humidity was reduced for the first time, and to complete the second time of humidity reduction. In this case, the blower 22 operates to blow the dry air into a driving cabin to implement a defogging function of the AC. After flowing out of the water condenser 20 of the AC, the coolant flows back to an inlet of the third water pump 9, completing coolant circulation.

It should be noted that, for the working condition shown in FIG. 6, the EV AC defogging function may be triggered based on a defogging requirement of a passenger cabin.

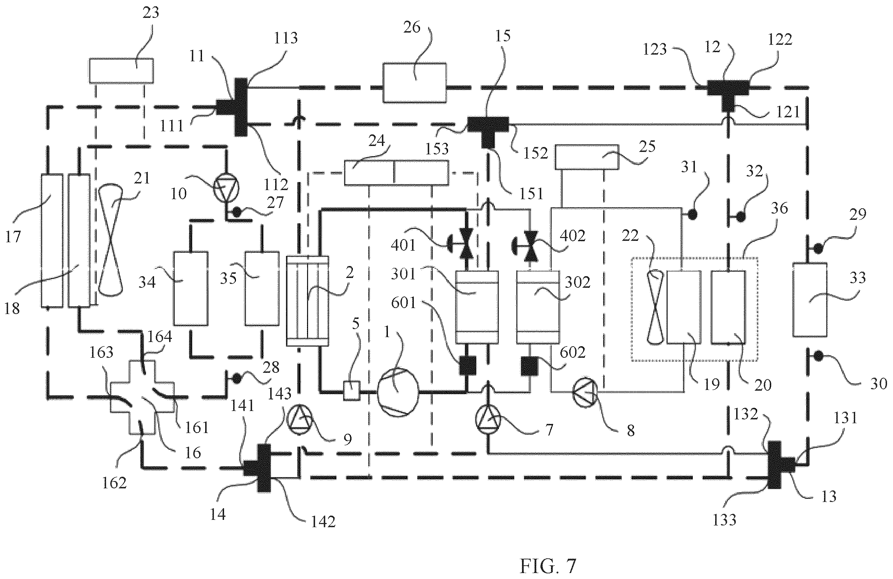

FIG. 7 is a schematic diagram of operation of the thermal management system shown in FIG. 2 under a fifth working condition. As shown in FIG. 7, when an EV battery 33 needs to be heated, a third water pump 9 pumps coolant into the condenser 2. In this case, the coolant absorbs heat from the condenser 2, and then flows into a PTC heater 26 to continue absorbing heat. The coolant flowing out of the PTC heater 26 continues flowing into a third end 123 of a second coolant three-way valve 12, and then flows into the EV battery 33 from a second end 122 of the second coolant three-way valve 12, to release heat to the EV battery 33, to heat the EV battery 33. A third coolant temperature sensor 29 and a third coolant temperature sensor 30 may be further respectively disposed at an inlet and an outlet of the EV battery 33, to monitor temperatures of coolant flowing into the EV battery 33 and flowing out of the EV battery 33. After flowing out of an outlet of the EV battery 33, the coolant continues flowing into a first end 131 of a third coolant three-way valve 13, and flows through a third end 133 of the third coolant three-way valve 13, and then returns to an inlet of the third water pump 9. In this case, a second end 132 of the third coolant three-way valve 13 is closed.

When an AC needs heating, the third water pump 9 pumps the coolant into the condenser 2. In this case, the coolant absorbs heat from the condenser 2, and then flows into the PTC heater 26 to continue absorbing heat. The coolant flowing out of the PTC heater 26 continues flowing into the third end 123 of the second coolant three-way valve 12, and then flows into a water condenser 20 in an air handling unit 36 from the first end 121 of the second coolant three-way valve 12. In this case, a blower 22 operates to blow the heated air into a driving cabin to implement a heating function of the AC. After flowing out of the water condenser 20 of the AC, the coolant flows back to the inlet of the third water pump 9, completing coolant circulation.

Based on the foregoing embodiment, in addition to a PTC heater disposed between the condenser 2 and the EV battery 33, to further improve heating efficiency, a PTC heater may be further disposed at an inlet of the first plate heat exchanger 301 in the refrigerant thermal management module.

When a motor needs to be cooled, in a motor coolant loop, a fourth water pump 10 pumps the coolant to a front motor 34 and a rear motor 35. In this case, the coolant absorbs heat from the front motor 34 and the rear motor 35, to cool the front motor 34 and the rear motor 35. A first coolant temperature sensor 27 and a second coolant temperature sensor 28 may be further respectively disposed at an inlet and an outlet of the front motor 34 and the rear motor 35, to monitor temperatures of coolant flowing into the front motor 34 and the rear motor 35 and flowing out of the front motor 34 and the rear motor 35. After flowing out of the outlet of the front motor 34 and the rear motor 35, the coolant continues flowing into a first end 161 of a four-way valve 16, and then flows through a fourth end 164 of the four-way valve 16 to a motor radiator 18. In this case, a fan 21 may operate to make the motor radiator 18 absorb heat from the outside. After flowing out of the motor radiator 18, the coolant flows into an inlet of the fourth water pump 10, completing coolant circulation.

In this case, a first water pump 7 pumps the coolant to the first plate heat exchanger 301. In this case, the first plate heat exchanger 301 absorbs heat from the flowing coolant to reduce a temperature of the coolant. Then, the coolant flows into a first end 151 of a fifth coolant three-way valve 15, and then flows out of a third end 153 of the fifth coolant three-way valve 15. In this case, a second end 152 of the fifth coolant three-way valve 15 is closed. The coolant flowing out of the third end 153 of the fifth coolant three-way valve 15 flows into a second end 112 of a first coolant three-way valve 11, and then flows out of a first end 111 of the first coolant three-way valve 11. In this case, a third end 113 of the first coolant three-way valve 11 is closed. The coolant flowing out of the first end 111 of the first coolant three-way valve 11 continues flowing into a battery radiator 17. In this case, a fan 21 may operate to dissipate heat from the battery radiator 17. After flowing out of an outlet of the battery radiator 17, the coolant continues flowing into a third end 163 of the four-way valve 16, through a second end 162 of the four-way valve 16, into a first end 141 of a fourth coolant three-way valve 14, and then flows out of a third end 143 of the fourth coolant three-way valve 14. In this case, a second end 142 of the fourth coolant three-way valve 14 is closed. Finally, the coolant flowing out of the third end 143 of the fourth coolant three-way valve 14 flows into an inlet of the first water pump 7, completing circulation.

Optionally, the outlet of the first plate heat exchanger 301 in the refrigerant thermal management module is connected to an inlet of the battery radiator 17, the outlet of the battery radiator 17 is connected to the inlet of the first water pump 7, and an outlet of the first water pump 7 is connected to the inlet of the first plate heat exchanger 301. In addition, the battery radiator 17 is disposed opposite to the motor radiator 18, so that an airflow blown by a fan 21 performs heat exchange on hot air heated by the motor radiator 18 and cold air cooled by the battery radiator 17.

It should be noted that, for the working condition shown in FIG. 7, heating of the EV battery may be triggered based on a temperature of the EV battery body, and AC heating may be determined based on a heating requirement of a passenger cabin. In addition, active cooling of the motor may be triggered based on a temperature of the motor body and an inlet water temperature of the motor. In addition, under the working condition shown in FIG. 7, the heating of the EV battery, the AC heating, and the active cooling of the motor may be separately performed, or may be simultaneously performed.

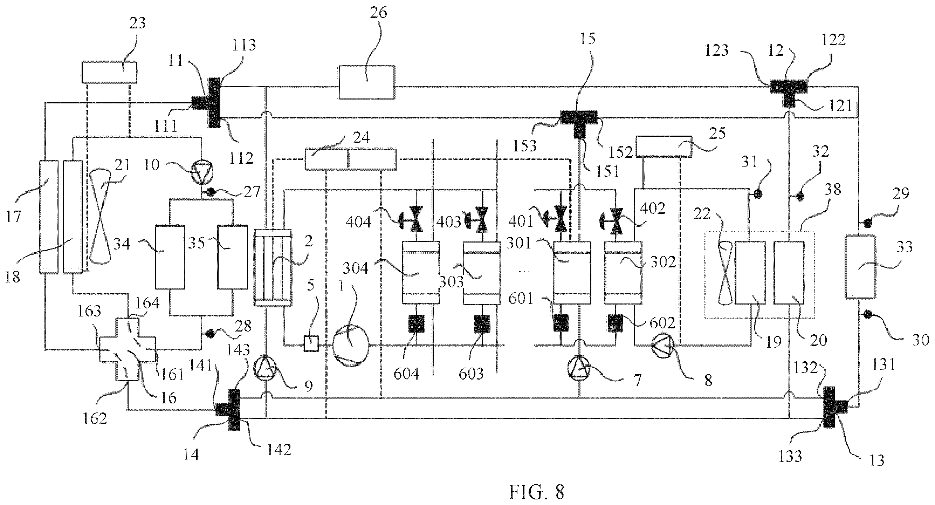

Based on the embodiment shown in FIG. 2. FIG. 8 is a schematic architectural diagram of another example thermal management system according to an embodiment of this application. As shown in FIG. 8, the thermal management system provided in this embodiment includes a coolant management module and a refrigerant thermal management module. The coolant management module includes a coolant loop corresponding to each vehicle function module. Specifically, for an implementation of the refrigerant thermal management module, refer to specific description in the embodiment shown in FIG. 1. Details are not described herein again.

In a possible design, in the refrigerant thermal management module provided in this embodiment, that a plurality of parallel refrigerant loops, for example, four parallel refrigerant loops are included may be used as an example for description. For example, a first refrigerant loop includes a first plate heat exchanger 301 and a first expansion valve 401 that are connected in series, a second refrigerant loop includes a second plate heat exchanger 302 and a second expansion valve 402 that are connected in series, a third refrigerant loop includes a third plate heat exchanger 303 and a third expansion valve 403 that are connected in series, and a fourth refrigerant loop includes a fourth plate heat exchanger 304 and a fourth expansion valve 404 that are connected in series. Optionally, based on the EV battery module and the EV AC module, the vehicle function module may further include a newly added function module, and the EV battery module, the EV AC module, and the newly added function module correspond to different target refrigerant loops. The foregoing newly added function module may be a vehicle-mounted refrigerator module, or may be another function module that needs to be cooled and/or heated. A specific form of the newly added function module is not limited in this embodiment, and may be added as needed based on a function design of a vehicle. It can be learned that the refrigerant thermal management module provided in this embodiment may meet cooling and/or heating requirements of a plurality of different vehicle function modules by disposing a plurality of parallel refrigerant loops, and may further adjust a quantity of refrigerant loops to adapt to an increase or a decrease of a quantity of vehicle function modules, so that the refrigerant thermal management module provided in this embodiment has better adaptability.

In addition, this application further provides a vehicle, including an EV battery module, an EV AC module, and the thermal management system provided in any one of the foregoing embodiments. The EV battery module is configured to provide power for a motor of the vehicle, the EV AC module is configured to heat or cool a vehicle seat cabin, and the thermal management system is configured to perform thermal management on the EV battery module and the EV AC module.

The foregoing description is merely a specific implementation of this application, but is not intended to limit the protection scope of this application. Therefore, the protection scope of this application shall be defined by the protection scope of the claims.

## Claims

1. A vehicle, comprising a vehicle function module comprising a EV battery module and an EV AC module, and a thermal management system, wherein the EV battery module is configured to provide power for a motor (34, 35) of the vehicle, the EV AC module is configured to heat or cool a vehicle seat cabin, and the thermal management system is configured to perform thermal management on the EV battery module and the EV AC module;
the thermal management system comprising a coolant management module and the refrigerant thermal management module;
the refrigerant thermal management module comprising: a compressor (1), a condenser (2), and at least two parallel refrigerant loops, wherein the compressor, the condenser, and the at least two parallel refrigerant loops are centrally arranged, and each of the at least two parallel refrigerant loops comprises an expansion valve (401, 402) and a plate heat exchanger (301, 302) that are connected in series;
when a vehicle function module needs to be cooled, an expansion valve in a target refrigerant loop corresponding to the vehicle function module is opened, wherein a plate heat exchanger in the target refrigerant loop is configured to absorb heat from a coolant loop of the vehicle function module; and
an outlet of the compressor is connected to an inlet of the condenser, an outlet of the condenser is connected to an inlet of the expansion valve in any one of the refrigerant loops, an outlet of the plate heat exchanger is connected to an inlet of the compressor, and when the vehicle function module needs to be heated, the condenser is configured to release heat to the coolant loop of the vehicle function module;
**characterized in that**
the EV battery module and the EV AC module correspond to different target refrigerant loops; and
the vehicle function module further comprises a vehicle-mounted refrigerator module, and the vehicle-mounted refrigerator module correspond to different target refrigerant loops;
and
when the EV battery module (33) needs to be heated, the battery coolant loop absorbs heat from a condenser (2) in the refrigerant thermal management module and releases heat to the EV battery module (33); and
a first plate heat exchanger (301) in the refrigerant thermal management module absorbs heat from a motor (34, 35) of the vehicle or an external environment of the vehicle;
and
an outlet of the first plate heat exchanger (301) in the refrigerant thermal management module is connected to an inlet of a battery radiator (17), an outlet of the battery radiator (17) is connected to an inlet of a motor radiator (18), an outlet of the motor radiator is connected to an inlet of a fourth water pump (10), an outlet of the fourth water pump (10) is connected to the motor (34, 35), an outlet of the motor (34, 35) is connected to an inlet of a first water pump (7), and an outlet of the first water pump is connected to an inlet of the first plate heat exchanger (301); and **in that** a heater (26) is disposed between the condenser (2) and the EV battery and a heater (26) is disposed at the inlet of the first plate heat exchanger (301) in the refrigerant thermal management module..

2. The vehicle according to claim 1, wherein a refrigerant pressure and temperature sensor, PT sensor, (601) is disposed between the compressor and the condenser.

3. The vehicle according to claim 1 or claim 2, wherein the coolant management module comprises a battery coolant loop corresponding to an EV battery module and an air conditioner coolant loop (AC coolant loop) corresponding to an EV AC module.

4. The vehicle according to claim 3, wherein when the EV battery module needs to be cooled, the battery coolant loop absorbs heat from the EV battery module and releases heat to a first plate heat exchanger in the refrigerant thermal management module; and
a battery coolant loop absorbs heat from a condenser in the refrigerant thermal management module, and a battery radiator in the battery coolant loop releases heat to an external environment.

5. The vehicle according to claim 4, wherein the battery coolant loop comprises the first plate heat exchanger, an electrical vehicle battery (EV battery), and a first water pump (7); and
an outlet of the first plate heat exchanger is connected to one end of the EV battery, the other end of the EV battery is connected to an inlet of the first water pump, and an outlet of the EV battery is connected to an inlet of the first plate heat exchanger.

6. The vehicle according to any one of claims 3 to 5, wherein when the EV AC module needs cooling, the AC coolant loop absorbs heat from a chiller in the EV AC module and releases heat to a second plate heat exchanger (302) in the refrigerant thermal management module.

7. The vehicle according to claim 6, wherein the AC coolant loop comprises the second plate heat exchanger, the chiller in the EV AC module, and a second water pump (8); and
an outlet of the second plate heat exchanger is connected to one end of the chiller, the other end of the chiller is connected to an inlet of the second water pump, and an outlet of the second water pump is connected to an inlet of the second plate heat exchanger.

8. The vehicle according to any preceding claim, wherein the battery coolant loop comprises the condenser, an EV battery, and a third water pump (9); and
an outlet of the condenser is connected to one end of the EV battery, the other end of the EV battery is connected to an inlet of the third water pump, and an outlet of the third water pump is connected to an inlet of the condenser.

9. The vehicle according to any preceding claim, wherein when the electric vehicle air conditioner (EV AC) needs heating, the AC coolant loop absorbs heat from the condenser in the refrigerant thermal management module and releases heat to a water condenser in the EV AC module.

10. The vehicle according to claim 9, wherein the AC coolant loop comprises the condenser, the water condenser, and the third water pump; and
the outlet of the condenser is connected to an inlet of the water condenser, an outlet of the water condenser is connected to the inlet of the third water pump, and the outlet of the third water pump is connected to the inlet of the condenser.

## Patentansprüche

1. Fahrzeug, das ein Fahrzeugfunktionsmodul, das ein EV-Batteriemodul und ein EV-Klimaanlagenmodul umfasst, und ein Wärmemanagementsystem umfasst, wobei das EV-Batteriemodul konfiguriert ist, um Strom für einen Motor (34, 35) des Fahrzeugs bereitzustellen, das EV-Klimaanlagenmodul konfiguriert ist, um eine Fahrzeugsitzkabine zu heizen oder zu kühlen, und das Wärmemanagementsystem konfiguriert ist, um Wärmemanagement an dem EV-Batteriemodul und dem EV-Klimaanlagenmodul durchzuführen;
wobei das Wärmemanagementsystem ein Kühlmittelmanagementmodul und das Kältemittel-Wärmemanagementmodul umfasst;
wobei das Kältemittel-Wärmemanagementsystem Folgendes umfasst: einen Kompressor (1), einen Kondensator (2) und mindestens zwei parallele Kältemittelkreisläufe, wobei der Kompressor, der Kondensator und die mindestens zwei parallelen Kältemittelkreisläufe zentral angeordnet sind, und jeder der mindestens zwei parallelen Kältemittelkreisläufe ein Expansionsventil (401, 402) und einen Plattenwärmetauscher (301, 302) umfasst, die in Reihe geschaltet sind;
wenn ein Fahrzeugfunktionsmodul gekühlt werden muss, ein Expansionsventil in einem Zielkältemittelkreislauf, der dem Fahrzeugfunktionsmodul entspricht, geöffnet wird, wobei ein Plattenwärmetauscher in dem Zielkältemittelkreislauf dazu konfiguriert ist, Wärme aus einem Kühlmittelkreislauf des Fahrzeugfunktionsmoduls aufzunehmen; und
ein Auslass des Kompressors mit einem Einlass des Kondensators verbunden ist, ein Auslass des Kondensators mit einem Einlass des Expansionsventils in einem beliebigen der Kältemittelkreisläufe verbunden ist, ein Auslass des Plattenwärmetauschers mit einem Einlass des Kompressors verbunden ist, und wenn das Fahrzeugfunktionsmodul beheizt werden muss, der Kondensator dazu konfiguriert ist, Wärme an den Kühlmittelkreislauf des Fahrzeugfunktionsmoduls abzugeben;
**dadurch gekennzeichnet, dass**
das EV-Batteriemodul und das EV-Klimaanlagenmodul unterschiedlichen Zielkältemittelkreisläufen entsprechen;
und das Fahrzeugfunktionsmodul ferner ein fahrzeugmontiertes Kältemodul umfasst, und das fahrzeugmontierte Kältemodul unterschiedlichen Zielkältemittelkreisläufen entspricht;
und wenn das EV-Batteriemodul (33) beheizt werden muss, der Batteriekühlmittelkreislauf Wärme aus einem Kondensator (2) in dem Kältemittel-Wärmemanagementmodul aufnimmt und Wärme an das EV-Batteriemodul (33) abgibt; und
ein erster Plattenwärmetauscher (301) in dem Kältemittel-Wärmemanagementmodul Wärme aus einem Motor (34, 35) des Fahrzeugs oder einer äußeren Umgebung des Fahrzeugs aufnimmt;
und ein Auslass des ersten Plattenwärmetauschers (301) in dem Kältemittel-Wärmemanagementmodul mit einem Einlass eines Batteriekühlers (17) verbunden ist, ein Auslass des Batteriekühlers (17) mit einem Einlass eines Motorkühlers (18) verbunden ist, ein Auslass des Motorkühlers mit einem Einlass einer vierten Wasserpumpe (10) verbunden ist, ein Auslass der vierten Wasserpumpe (10) mit dem Motor (34, 35) verbunden ist, ein Auslass des Motors (34, 35) mit einem Einlass einer ersten Wasserpumpe (7) verbunden ist und ein Auslass der ersten Wasserpumpe mit einem Einlass des ersten Plattenwärmetauschers (301) verbunden ist; und **dadurch, dass**
eine Heizvorrichtung (26) zwischen dem Kondensator (2) und der EV-Batterie angeordnet ist und eine Heizvorrichtung (26) am Einlass des ersten Plattenwärmetauschers (301) in dem Kältemittel-Wärmemanagementsystem angeordnet ist.

2. Fahrzeug nach Anspruch 1, wobei ein Kältemitteldruck- und Temperatursensor, PT-Sensor, (601) zwischen dem Kompressor und dem Kondensator angeordnet ist.

3. Fahrzeug nach Anspruch 1 oder Anspruch 2, wobei das Kühlmittelmanagementmodul einen Batteriekühlmittelkreislauf, der einem EV-Batteriemodul entspricht, und einen Klimaanlagenkühlmittelkreislauf (AC-Kühlmittelkreislauf), der einem EV-Klimaanlagenmodul entspricht, umfasst.

4. Fahrzeug nach Anspruch 3, wobei, wenn das EV-Batteriemodul gekühlt werden muss, der Batteriekühlmittelkreislauf Wärme aus dem EV-Batteriemodul aufnimmt und Wärme an einen ersten Plattenwärmetauscher in dem Kältemittel-Wärmemanagementsystem abgibt; und
ein Batteriekühlmittelkreislauf Wärme aus einem Kondensator in dem Kältemittel-Wärmemanagementmodul aufnimmt und ein Batteriekühler in dem Batteriekühlmittelkreislauf Wärme an eine externe Umgebung abgibt.

5. Fahrzeug nach Anspruch 4, wobei der Batteriekühlmittelkreislauf den ersten Plattenwärmetauscher, eine Elektrofahrzeugbatterie (EV-Batterie) und eine erste Wasserpumpe (7) umfasst; und
ein Auslass des ersten Plattenwärmetauschers mit einem Ende der EV-Batterie verbunden ist, das andere Ende der EV-Batterie mit einem Einlass der ersten Wasserpumpe verbunden ist und ein Auslass der EV-Batterie mit einem Einlass des ersten Plattenwärmetauschers verbunden ist.

6. Fahrzeug nach einem der Ansprüche 3 bis 5, wobei, wenn das EV-Klimaanlagenmodul gekühlt werden muss, der AC-Kühlmittelkreislauf Wärme aus einem Kühler in dem EV-Klimaanlagenmodul aufnimmt und Wärme an einen zweiten Plattenwärmetauscher (302) in dem Kältemittel-Wärmemanagementmodul abgibt.

7. Fahrzeug nach Anspruch 6, wobei der AC-Kühlmittelkreislauf den zweiten Plattenwärmetauscher, den Kühler in dem EV-Klimaanlagenmodul und eine zweite Wasserpumpe (8) umfasst; und
ein Auslass des zweiten Plattenwärmetauschers mit einem Ende des Kühlers verbunden ist, das andere Ende des Kühlers mit einem Einlass der zweiten Wasserpumpe verbunden ist und ein Auslass der zweiten Wasserpumpe mit einem Einlass des zweiten Plattenwärmetauschers verbunden ist.

8. Fahrzeug nach einem der vorstehenden Ansprüche, wobei der Batteriekühlmittelkreislauf den Kondensator, eine EV-Batterie und eine dritte Wasserpumpe (9) umfasst; und
ein Auslass des Kondensators mit einem Ende der EV-Batterie verbunden ist, das andere Ende der EV-Batterie mit einem Einlass der dritten Wasserpumpe verbunden ist und ein Auslass der dritten Wasserpumpe mit einem Einlass des Kondensators verbunden ist.

9. Fahrzeug nach einem der vorstehenden Ansprüche, wobei, wenn die Klimaanlage des Elektrofahrzeugs (EV AC) beheizt werden muss, der AC-Kühlmittelkreislauf Wärme aus dem Kondensator in dem Kältemittel-Wärmemanagementmodul aufnimmt und Wärme an einen Wasserkondensator in dem EV-Klimaanlagenmodul abgibt.

10. Fahrzeug nach Anspruch 9, wobei der AC-Kühlmittelkreislauf den Kondensator, den Wasserkondensator und die dritte Wasserpumpe umfasst; und
der Auslass des Kondensators mit einem Einlass des Wasserkondensators verbunden ist, ein Auslass des Wasserkondensators mit dem Einlass der dritten Wasserpumpe verbunden ist und der Auslass der dritten Wasserpumpe mit dem Einlass des Kondensators verbunden ist.

## Revendications

1. Véhicule, comprenant un module de fonction de véhicule comprenant un module de batterie de VE et un module de climatiseur de VE, et un système de gestion thermique, dans lequel le module de batterie de VE est configuré pour fournir de l'énergie pour un moteur (34, 35) du véhicule, le module de climatiseur de VE est conçu pour chauffer ou refroidir un habitacle de siège de véhicule, et le système de gestion thermique est configuré pour réaliser une gestion thermique sur le module de batterie de VE et le module de climatiseur de VE ;
le système de gestion thermique comprenant un module de gestion de liquide de refroidissement et le module de gestion thermique de réfrigérant ;
le module de gestion thermique de réfrigérant comprenant : un compresseur (1), un condenseur (2), et au moins deux boucles de réfrigérant parallèles, dans lequel le compresseur, le condenseur et les au moins deux boucles de réfrigérant parallèles sont disposés de manière centrale, et chacune parmi les au moins deux boucles de réfrigérant parallèles comprend un détendeur (401, 402) et un échangeur de chaleur à plaques (301, 302) qui sont reliés en série ;
lorsqu'un module de fonction de véhicule doit être refroidi, un détendeur dans une boucle de réfrigérant cible correspondant au module de fonction de véhicule est ouvert, dans lequel un échangeur de chaleur à plaques dans la boucle de réfrigérant cible est conçu pour absorber de la chaleur provenant d'une boucle de réfrigérant du module de fonction de véhicule ; et
une sortie du compresseur est reliée à une entrée du condenseur, une sortie du condenseur est reliée à une entrée du détendeur dans l'une quelconque des boucles de réfrigérant, une sortie de l'échangeur de chaleur à plaques est reliée à une entrée du compresseur, et lorsque le module de fonction de véhicule doit être chauffé, le condenseur est conçu pour libérer de la chaleur vers la boucle de liquide de refroidissement du module de fonction de véhicule ;
**caractérisé en ce que**
le module de batterie de VE et le module de climatiseur de VE correspondent à des boucles de réfrigérant cibles différentes ;
et le module de fonction de véhicule comprend en outre un module de refroidisseur monté sur le véhicule, et le module de refroidisseur monté sur le véhicule correspond à différentes boucles de réfrigérant cibles ;
et lorsque le module de batterie de VE (33) doit être chauffé, la boucle de liquide de refroidissement de batterie absorbe de la chaleur provenant d'un condenseur (2) dans le module de gestion thermique de réfrigérant et libère de la chaleur vers le module de batterie de VE (33) ; et
un premier échangeur de chaleur à plaques (301) dans le module de gestion thermique de réfrigérant absorbe de la chaleur provenant d'un moteur (34, 35) du véhicule ou d'un environnement externe du véhicule ;
et une sortie du premier échangeur de chaleur à plaques (301) dans le module de gestion thermique de réfrigérant est reliée à une entrée d'un radiateur de batterie (17), une sortie du radiateur de batterie (17) est reliée à une entrée d'un radiateur de moteur (18), une sortie du radiateur de moteur est reliée à une entrée d'une quatrième pompe à eau (10), une sortie de la quatrième pompe à eau (10) est reliée au moteur (34, 35), une sortie du moteur (34, 35) est reliée à une entrée d'une première pompe à eau (7), et une sortie de la première pompe à eau est reliée à une entrée du premier échangeur de chaleur à plaques (301) ; et **en ce que**
un élément chauffant (26) est disposé entre le condenseur (2) et la batterie de VE et un élément chauffant (26) est disposé au niveau de l'entrée du premier échangeur de chaleur à plaques (301) dans le module de gestion thermique de réfrigérant.

2. Véhicule selon la revendication 1, dans lequel un capteur de pression et de température de réfrigérant, capteur PT (601), est disposé entre le compresseur et le condenseur.

3. Véhicule selon la revendication 1 ou la revendication 2, dans lequel le module de gestion de liquide de refroidissement comprend une boucle de liquide de refroidissement de batterie correspondant à un module de batterie de VE et une boucle de liquide de refroidissement de climatiseur (boucle de liquide de refroidissement de climatiseur) correspondant à un module de climatiseur de VE.

4. Véhicule selon la revendication 3, dans lequel, lorsque le module de batterie de VE doit être refroidi, la boucle de liquide de refroidissement de batterie absorbe de la chaleur provenant du module de batterie de VE et libère de la chaleur vers un premier échangeur de chaleur à plaques dans le module de gestion thermique de réfrigérant ; et
une boucle de liquide de refroidissement de batterie absorbe de la chaleur provenant d'un condenseur dans le module de gestion thermique de réfrigérant, et un radiateur de batterie dans la boucle de liquide de refroidissement de batterie libère de la chaleur vers un environnement externe.

5. Véhicule selon la revendication 4, dans lequel la boucle de liquide de refroidissement de batterie comprend le premier échangeur de chaleur à plaques, une batterie de véhicule électrique (batterie de VE), et une première pompe à eau (7) ; et
une sortie du premier échangeur de chaleur à plaques est reliée à une extrémité de la batterie de VE, l'autre extrémité de la batterie de VE est reliée à une entrée de la première pompe à eau, et une sortie de la batterie de VE est reliée à une entrée du premier échangeur de chaleur à plaques.

6. Véhicule selon l'une quelconque des revendications 3 à 5, dans lequel, lorsque le module de climatiseur de VE doit être refroidi, la boucle de liquide de refroidissement de climatiseur absorbe de la chaleur provenant d'un dispositif de refroidissement dans le module de climatiseur de VE et libère de la chaleur vers un second échangeur de chaleur à plaques (302) dans le module de gestion thermique de réfrigérant.

7. Véhicule selon la revendication 6, dans lequel la boucle de liquide de refroidissement de climatiseur comprend le second échangeur de chaleur à plaques, le dispositif de refroidissement dans le module de climatiseur de VE, et une deuxième pompe à eau (8) ; et
une sortie du second échangeur de chaleur à plaques est reliée à une extrémité du dispositif de refroidissement, l'autre extrémité du dispositif de refroidissement est reliée à une entrée de la deuxième pompe à eau, et une sortie de la deuxième pompe à eau est reliée à une entrée du second échangeur de chaleur à plaques.

8. Véhicule selon l'une quelconque revendication précédente, dans lequel la boucle de liquide de refroidissement de batterie comprend le condenseur, une batterie de VE, et une troisième pompe à eau (9) ; et
une sortie du condenseur est reliée à une extrémité de la batterie de VE, l'autre extrémité de la batterie de VE est reliée à une entrée de la troisième pompe à eau, et une sortie de la troisième pompe à eau est reliée à une entrée du condenseur.

9. Véhicule selon l'une quelconque revendication précédente, dans lequel, lorsque le climatiseur de véhicule électrique (climatiseur de VE) doit être chauffé, la boucle de liquide de refroidissement de climatiseur absorbe de la chaleur provenant du condenseur dans le module de gestion thermique de réfrigérant et libère de la chaleur vers un condenseur d'eau dans le module de climatiseur de VE.

10. Véhicule selon la revendication 9, dans lequel la boucle de liquide de refroidissement de climatiseur comprend le condenseur, le condenseur d'eau, et la troisième pompe à eau ; et
la sortie du condenseur est reliée à une entrée du condenseur d'eau, une sortie du condenseur d'eau est reliée à l'entrée de la troisième pompe à eau, et la sortie de la troisième pompe à eau est reliée à l'entrée du condenseur.
